# FASCICULE DE BREVET EUROPEEN

(11) **EP 4 080 689 B1**
(45) Date de publication et mention de la délivrance du brevet: **22.11.2023**
(21) Numéro de dépôt: 22168703.1
(22) Date de dépôt: 19.04.2022
(51) Int. Cl.: H01R 13/625, H01R 43/18, B23B 35/00, F16B 21/04

(54) **PROCÉDÉ DE RÉALISATION D'UN ÉLÉMENT DE CONNEXION À BAÏONNETTE POUR CONNECTEUR**
VERFAHREN ZUR HERSTELLUNG EINES BAJONETT-VERBINDUNGSELEMENTS FÜR STECKVERBINDER
METHOD FOR PRODUCING A BAYONET-SHAPED CONNECTION ELEMENT FOR CONNECTOR

(30) Priorité: 19.04.2021 FR 2104047
(43) Date de publication de la demande: 26.10.2022
(73) Titulaire: SOURIAU, 78000 Versailles (FR)
(72) Inventeur: DEMARTHON, Simon, 72100 Le Mans (FR); TRONCHET, Emilie, 72110 Saint Célerin (FR); MOREAU, Florian, 72100 Le Mans (FR); ALLAIN, Patrick, 72300 Juigné sur Sarthe (FR); DEFAIT, Jimmy, 72240 Ruillé-en-Champagne (FR); NOBLET, Frédéric, 72230 Mulsanne (FR); HACHOUE, Nathalie, 44980 Sainte-Luce-sur-Loire (FR)
(74) Mandataire: Ipside

(56) Documents cités:
- US-A- 5 256 077
- US-A1- 2011 206 333

## Description

### Domaine technique de l'invention

La présente invention concerne un procédé de réalisation d'un élément de connexion, tel qu'une embase, pour un connecteur à baïonnette. Elle s'applique, en particulier, au montage d'ergots participant au système à baïonnette du connecteur sur le corps principal de l'élément de connexion correspondant.

### Technique antérieure

Il est connu de verrouiller la connexion entre une fiche et une embase de connecteur électrique, par exemple, au moyen d'un système à baïonnette. Plus précisément, la fiche est munie d'une bague de verrouillage fixe en translation et apte à être verrouillée sur la paroi externe de l'embase complémentaire lorsque la connexion entre les contacts de la fiche et les contacts de l'embase est réalisée. Le corps principal de l'embase est, lui, muni d'ergots s'étendant en saillie radiale vers l'extérieur depuis la paroi externe de l'embase. Ces ergots sont destinés à coopérer avec des rainures creusées dans la paroi interne de la bague de verrouillage, en fin de verrouillage de la bague autour de l'embase, les ergots débouchent dans des orifices ménagés en extrémités des rainures, afin de rendre le verrouillage de la fiche et l'embase irréversible, ou tout le moins de rendre le déverrouillage involontaire impossible.

Un tel dispositif de verrouillage à baïonnette présente un grand intérêt du point de vu de la rapidité du verrouillage. Il est donc très utilisé dans de nombreux domaines, tels que celui de l'aéronautique civile ou militaire, ou toute autre application en milieu sévère.

Il existe de de nombreuses formes de réalisation des ergots sur le corps de l'embase. Par exemple, les ergots peuvent être taillés dans la masse. Ils sont alors réalisés dans la même matière que le corps de l'embase et ont les caractéristiques mécaniques de cette matière. Les ergots étant des pièces d'usure, lorsque le corps est en alliage léger, la tenue à l'usure est alors moindre que lorsque le corps est en acier inoxydable. Autrement, les ergots peuvent être rapportés mécaniquement et, dans ce cas, ils peuvent être dans un matériau tout autre, et notamment en inox, afin de répondre aux exigences d'usure. Ainsi, il est connu de rapporter des ergots en inox sur un corps d'embase en alliage d'aluminium. Le corps de l'embase doit cependant être traité de manière à résister à la corrosion. Un tel traitement consiste le plus souvent en une couche de protection, appliquée par dépôt chimique ou électrolytique. Cette couche de protection permet à un tel connecteur de supporter différentes agressions de l'environnement et, notamment, de supporter des environnements humides en supprimant les risques de corrosion ou de rouille.

Il est aussi possible de procéder au dépôt anticorrosion après la mise en place des ergots sur le corps de l'embase.

Mais cette solution a un inconvénient d'entrainer une fissuration de la protection anticorrosion à l'interface entre l'ergot et l'embase.

C'est pourquoi, le plus souvent, on préfère procéder dans un premier temps au dépôt de la couche de protection, puis ensuite à la mise en place des ergots.

Certaines protections anticorrosion sont fragiles et les contraintes mécaniques entre certains points de contact des ergots sur l'embase recouverte de la couche anticorrosion entraînent des cassures de cette couche de protection. De plus, la mise en place même des ergots sur l'embase, qui nécessite une insertion en force dudit ergot dans l'orifice correspondant ménagé sur l'embase, peut causer des fissures dans la couche de protection. Ces fissures et cassures sont donc concentrées dans la zone de contact entre l'ergot et le l'orifice sur l'embase, laissant apparaître la matière première utilisée pour réaliser le corps d'embase. La fonction anticorrosion de la couche de protection n'est donc pas maintenue dans ces zones. Le dispositif dans son ensemble s'en trouve fragilisé.

Aussi, dans l'invention, on cherche à fournir un procédé de réalisation d'un élément de connexion pour connecteur à baïonnette, tel qu'une embase, qui ne présente pas tout ou partie des inconvénients cités ci-dessus. Un autre but de l'invention est de réaliser un élément de connexion pour connecteur à baïonnette, muni d'ergots, et qui soit apte à résister aux contraintes mécaniques notamment au niveau de la zone de liaison avec les ergots, quelle que soit la nature du revêtement pouvant recouvrir ledit élément de connexion.

Un autre but de l'invention est de minimiser les contraintes mécaniques sur la protection de surface.

Il est connu le document US201120633 ou US5256077. Toutefois, ces documents ne permettent pas de satisfaire les exigences de la présente invention.

### Présentation de l'invention

La présente invention vise à remédier à ces inconvénients avec une approche totalement novatrice.

Ces objectifs, ainsi que d'autres qui apparaîtront par la suite, sont atteints à l'aide d'un procédé de réalisation d'un élément de connexion à baïonnette pour connecteur, selon lequel on réalise un corps d'élément de connexion, de forme générale cylindrique creuse, ledit procédé comporte l'étape suivante :
a) on réalise un alésage traversant par perçage d'une paroi du corps de l'élément de connexion, depuis la surface externe de ladite paroi ;
   et ledit procédé est remarquable en ce qu'il comporte les étapes supplémentaires suivantes :
b) on usine la surface externe de la paroi autour de l'alésage de manière à créer une surface de contact conique autour dudit alésage ;
c) on insère un ergot dans l'alésage, depuis la surface externe de la paroi, de manière à ce qu'une tête de l'ergot soit en saillie de la surface externe de la paroi de l'élément de connexion, ledit ergot ayant une surface de contact conique correspondante à la surface de contact conique de l'alésage.

Grâce à ces dispositions, les contraintes dans l'ergot sont réduites et sur la protection de surface de la mécanique de connecteur. Grâce à la surface de contact conique l'ergot est maintenu dans son axe, y compris lorsqu'il existe un jeu dans le montage entre le pied de l'ergot et l'alésage.

La surface de contact conique permet une transmission directe de la force appliquée sur l'ergot vers le corps d'embase.

L'invention est avantageusement mise en oeuvre selon les modes de réalisation et les variantes exposées ci-après, lesquelles sont à considérer individuellement ou selon toute combinaison techniquement opérante.

Dans un mode de réalisation, le procédé comporte l'étape supplémentaire suivante : on répète les opérations a) à c) pour chacun des ergots devant être monté sur la paroi de l'élément de connexion.

Dans un mode de réalisation, les étapes a) et b) sont réalisées simultanément.

Dans un mode de réalisation, à l'étape b), l'angle de la surface de contact conique est compris entre 30 et 60° .

Dans un mode de réalisation, le procédé comporte l'étape supplémentaire suivante : d) on sertit l'extrémité arrière de l'ergot, monté dans l'alésage correspondant, sur la surface interne de la paroi de l'élément de connexion.

Dans un mode de réalisation, le procédé comporte l'étape supplémentaire suivante : e) on applique une protection anticorrosion sur la surface externe de la paroi de l'élément de connexion, après avoir réalisé l'alésage, et avant d'avoir inséré l'ergot dans ledit alésage.

### Brève description des figures

D'autres avantages, buts et caractéristiques de la présente invention ressortent de la description qui suit faite, dans un but explicatif et nullement limitatif, en regard des dessins annexés, dans lesquels :
[Fig. 1] la figure 1 représente une coupe transversale d'une partie du corps de l'embase et d'un ergot ;
[Fig. 2] la figure 2 représente plusieurs histogrammes ;

### Description des modes de réalisation

L'embase est munie d'un corps principal dont une extrémité de connexion porte les ergots, ou protubérances, du système à baïonnette. Les ergots s'étendent sur un périmètre externe du corps principal. Les ergots sont en saillie vers l'extérieur depuis la surface externe de la paroi dudit corps principal, afin de pouvoir coopérer avec une bague de verrouillage munie d'orifices complémentaires.

Le corps principal de l'embase est muni d'un insert s'étendant longitudinalement dans le corps creux du corps principal, ledit insert étant muni de logements longitudinaux dans lesquels des contacts sont destinés à s'étendre.

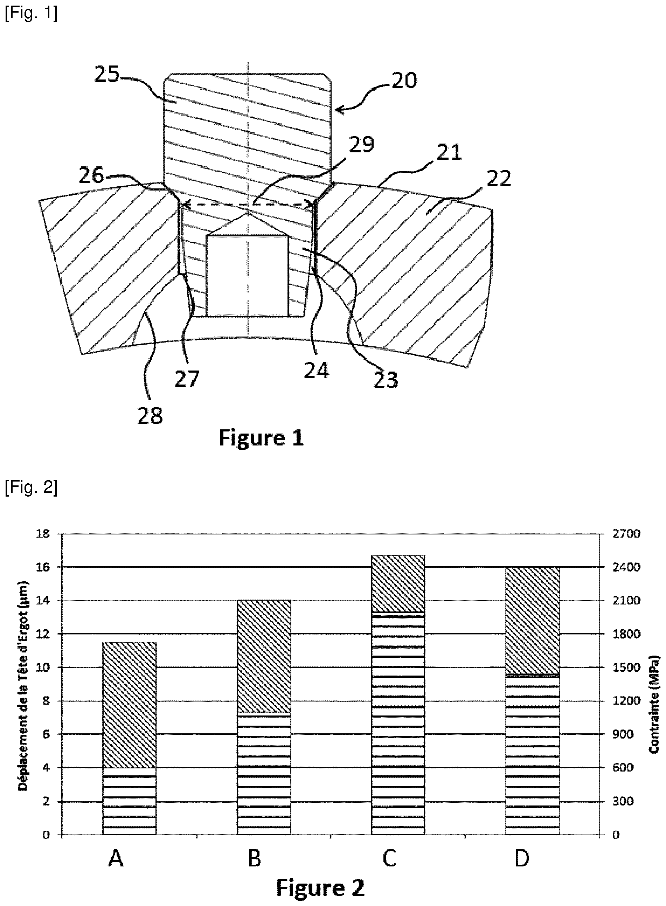

La figure 1 représente une coupe transversale d'une partie du corps de l'embase et d'un ergot.

L'ergot 20 est en saillie de la surface externe 21 de la paroi 22 du corps principal de l'embase. Plus précisément, l'ergot 20 traverse la paroi 22, de manière à ce que le corps 23 dudit ergot soit au moins partiellement logé dans un orifice 24 traversant ménagé dans ladite paroi 22, et de manière à ce que la tête 25 dudit ergot 20 soit en saillie de la surface externe 21 de ladite paroi 5.

Le chanfrein de surface d'appui ou surface de contact conique 26 est creusé depuis la surface externe 21 de la paroi 22 et entoure la tête 25 de l'ergot 20.

Cette figure montre aussi le pied de l'ergot 29.

La réalisation des ergots avec chanfrein sous la tête d'ergot 25 sont réalisés avec des moyens conventionnelle de décolletage à came. Les moyens sont identiques aux solutions actuelles sans chanfrein.

La surface de contact conique 26 peut être obtenu, notamment par l'utilisation d'un forêt étagé spécifique. L'utilisation d'un foret étagé évite ne pas dégrader la cadence de fabrication et assurer une maîtrise dimensionnelle de la profondeur du chanfrein. A l'exception du foret de perçage, l'usinage des corps de mécanique est réalisé sur des moyens conventionnels.

L'alésage traversant 24 (orifice) est ménagé radialement dans la paroi 22 du corps principal de l'embase, et débouche ainsi par une première extrémité au niveau de la surface externe 21 de ladite paroi 22, et par une seconde extrémité 27, opposée à la première, au niveau d'une surface interne 28 de ladite paroi 22.

Le diamètre de la tête 25 de l'ergot 20 est strictement supérieur au diamètre de l'alésage traversant 24, de sorte que la tête 25 de l'ergot 20 repose sur la surface de contact conique 26.

Plus précisément, la surface de contact conique 26 correspond à la liaison entre la tête 25 et le corps cylindrique 23 de l'ergot 20 repose contre la surface de contact conique 26.

La surface externe 21 de la paroi 22 est recouverte d'un revêtement protecteur contre la corrosion, ou autre. Le dépôt de ce revêtement peut être réalisé par tout moyen connu et notamment par dépôt chimique, électrolytique ou galvanoplastie. Selon l'invention, ce dépôt est avantageusement réalisé une fois les alésages traversant 24 réalisés sur la paroi externe 22 de l'embase, et avant l'introduction des ergots 20 dans les alésages 24 correspondants.

L'opération et les équipements d'assemblage de l'ergot 20 évoluent. L'opération d'assemblage est réalisée en deux étapes : l'emmanchement et sertissage.

Les deux opérations doivent être contrôlées en force afin d'assurer la maîtrise des efforts. L'emmanchement de l'ergot est réalisé par application d'une force d'emmanchement sur la tête d'ergot 25. L'emmanchement est stoppé lorsque la force atteint la limite définie (exemple 300N) permettant d'assurer un emmanchement complet de l'ergot sans dépasser la contrainte en compression de la protection de surface sous la tête d'ergot.

Afin de garantir le contact mécanique entre l'ergot 20 et l'embase lors de la transition vers la phase de sertissage, un système de ressort sur l'outillage permet de plaquer le corps de mécanique sur l'ergot après arrêt de l'application de la force d'emmanchement.

Le sertissage est alors réalisé par application d'une force sur la tête de l'ergot venant en contact avec une bouterolle sphérique. Le sertissage est stoppé lorsque la force atteinte la limite définie.

La figure 2 montre plusieurs histogrammes. Chaque colonne représente le déplacement de la tête d'ergot en µm sous l'effet d'une contrainte radiale exercé au sommet de la tête d'ergot, représenté avec des traits obliques combiné avec une contrainte sous la tête d'ergot en MPa représenté avec des traits horizontaux.

La colonne A représente un chanfrein à 45° non serré.

La colonne B représente un chanfrein à 30° non serré.

La colonne C représente un lamage non serré.

La colonne D représente un lamage serré.

Les deux dernières colonnes C et D représentent l'état de la technique précédente.

Les déplacements sous charge de la tête d'ergot sont plus faibles avec la conception chanfreinée (A et B) par comparaison à la conception lamé (C et D). Les histogrammes confirment la réduction de la translation de la tête d'ergot grâce chanfrein = meilleure rétention.

Contrainte maximale sous la tête d'ergot réduite avec la conception chanfreinée (A et B) par comparaison à la conception lamé (C et D). Les histogrammes confirment la réduction des contraintes sur protection pendant verrouillage = meilleur robustesse de la conception.

Il existe plusieurs intérêts à la présente invention listés ci-après.

La surface de contact conique permet d'assurer un contact mécanique entre la tête de l'ergot et le corps de mécanique garantissant la rétention de l'ergot (absence de mouvement de la tête d'ergot sous une charge radiale de 220N) malgré la présence d'un jeu de montage entre le pied de l'ergot et le perçage d'embase.

La possibilité de jeu de montage permet la réduction (pouvant aller jusqu'à la suppression) du niveau de serrage entre le pied d'ergot sans modification des tolérances standards (selon un exemple : passage d'un montage avec serrage de 0/+0.11mm à un montage avec du jeu/serrage -0.07/+0.04mm). Cette réduction à un niveau de serrage maximal de 0.04mm entre le pied de l'ergot dans le diamètre de perçage du corps de mécanique conduit à une contrainte de compression sur la protection de surface du diamètre de perçage inférieure 600MPa (ZnNi).

En cas de suppression complète du serrage entre le pied d'ergot et le diamètre de perçage, ce qui est possible avec cette conception, l'effort du au serrage devient nul permettant d'éliminer totalement le défaut de résistance de la protection de surface dans cette zone.

La possibilité de jeu de montage permet l'augmentation des tolérances sur le diamètre de pied d'ergot pour un diamètre de perçage donnée (avec épaisseur de protection). Cette augmentation permet la rationalisation des ergots utilisables pour diverses conceptions de connecteurs et choix de protection de surface (épaisseurs différentes).

La présence d'une surface d'appui conique entraîne une augmentation de la surface d'appui projeté (+100%) entre la tête d'ergot et le corps de mécanique. Cette augmentation est liée à géométrie conique évitant la nécessité de réalisation d'un rayonnage entre le perçage et le diamètre extérieur de corps de connecteurs. Ce rayonnage est nécessaire sur une conception standard (perçage simple) pour éviter les effets de pointes lors de la réalisation d'une protection de surface électrolytique (effet de pointe conduisant à la dégradation de la protection lors du montage). L'augmentation de la surface d'appui permet une réduction (-50%) des contraintes sur la protection de surface lors de l'emmanchement de l'ergot. Cela permet l'utilisation d'une protection de surface de résistance inférieure de 50% pour une conception donnée. Pour des forces d'emmanchement de 300N (nécessaire avec serrage > 0.04mm), la contrainte sur la protection de surface sous la tête d'ergot est alors inférieure à 300MPa permettant l'usage de protection de faible résistance mécanique < 300MPa. Dans le cas d'une conception avec jeu de montage, les efforts d'insertion sur < 50N permettant le montage d'ergot sans dégradation pour des protections dont la résistance est < 50Mpa.

La présence de la portée conique permet de divisé par deux efforts sur la protection de surface généré par une force radiale lors d'un essai de rétention radiale.

La solution est utilisable par les connecticiens pour la réalisation de connectique à baïonnette aluminium associée avec des protections assurer une fonction de résistance à la corrosion et dont la résistance est limitée (< 600MPa) réalisé par voie électrolytique (exemple : ZnNi ou Ni-PTFE).

### LISTE DES SIGNES DE RÉFÉRENCE

**[Table 1]**

| Références | Désignations |
|---|---|
| 20 | Ergot |
| 21 | surface externe |
| 22 | Paroi du corps principal |
| 23 | Corps |
| 24 | alésage |
| 25 | Tête de l'ergot |
| 26 | surface de contact conique |
| 27 | seconde extrémité |
| 28 | surface interne |
| 29 | pied de l'ergot |

**[Table 2]**

| Références | Désignations |
|---|---|
| A | chanfrein à 45° non serré |
| B | chanfrein à 30° non serré |
| C | lamage non serré |
| D | lamage serré |

## Revendications

1. Procédé de réalisation d'un élément de connexion à baïonnette pour connecteur, selon lequel on réalise un corps d'élément de connexion, de forme générale cylindrique creuse, ledit procédé comporte l'étape suivante :
a) on réalise un alésage traversant (24) par perçage d'une paroi (22) du corps de l'élément de connexion, depuis une surface externe (21) de ladite paroi ;
et ledit procédé est **caractérisé en ce qu'**il comporte les étapes supplémentaires suivantes :
b) on usine la surface externe (21) de la paroi autour de l'alésage de manière à créer une surface de contact conique (26) autour dudit alésage ;
c) on insère un ergot (20) dans l'alésage, depuis la surface externe (21) de la paroi (22), de manière à ce qu'une tête (25) de l'ergot soit en saillie de la surface externe (21) de la paroi (22) de l'élément de connexion, ledit ergot ayant une surface de contact conique correspondante à la surface de contact conique (26) de l'alésage.

2. Procédé de réalisation d'un élément de connexion à baïonnette selon la revendication 1, dans lequel il comporte l'étape supplémentaire suivante :
- on répète les opérations a) à c) pour chacun des ergots (20) devant être monté sur la paroi (22) de l'élément de connexion.

3. Procédé de réalisation d'un élément de connexion à baïonnette selon la revendication 1, dans lequel les étapes a) et b) sont réalisées simultanément.

4. Procédé de réalisation d'un élément de connexion à baïonnette selon la revendication 1, dans lequel à l'étape b), l'angle de la surface de contact conique (26) est compris entre 30 et 60° .

5. Procédé de réalisation d'un élément de connexion à baïonnette selon la revendication 1, dans lequel il comporte l'étape supplémentaire suivante :
d) on sertit une extrémité arrière de l'ergot, monté dans l'alésage correspondant, sur une surface interne (28) de la paroi de l'élément de connexion.

6. Procédé de réalisation d'un élément de connexion à baïonnette selon la revendication 1, dans lequel il comporte l'étape supplémentaire suivante :
e) on applique une protection anticorrosion sur la surface externe de la paroi de l'élément de connexion, après avoir réalisé l'alésage, et avant d'avoir inséré l'ergot dans ledit alésage.

## Patentansprüche

1. Verfahren zur Erstellung eines Bajonett-Verbindungselements für einen Steckverbinder, wobei ein Verbindungselementkörper von allgemein hohlzylindrischer Form erstellt wird, wobei das Verfahren den folgenden Schritt beinhaltet:
a) Erstellen einer durchgehenden Ausdrehung (24) durch Durchbohren einer Wand (22) des Verbindungselementkörpers ausgehend von einer äußeren Fläche (21) der Wand;
und das Verfahren **dadurch gekennzeichnet ist, dass** es die folgenden zusätzlichen Schritte beinhaltet:
b) Abspanen der äußeren Fläche (21) der Wand um die Ausdrehung herum, so dass um die Ausdrehung herum eine konische Kontaktfläche (26) entsteht;
c) Einführen eines Nockens (20) in die Ausdrehung ausgehend von der äußeren Fläche (21) der Wand (22), so dass ein Kopf (25) des Nockens aus der äußeren Fläche (21) der Wand (22) des Verbindungselements herausragt, wobei der Nocken eine konische Kontaktfläche aufweist, die der konischen Kontaktfläche (26) der Ausdrehung entspricht.

2. Verfahren zur Erstellung eines Bajonett-Verbindungselements nach Anspruch 1, wobei es den folgenden zusätzlichen Schritt beinhaltet:
- Wiederholen der Vorgänge a) bis c) für jeden der Nocken (20), vor dem Montieren in der Wand (22) des Verbindungselements.

3. Verfahren zur Erstellung eines Bajonett-Verbindungselements nach Anspruch 1, wobei die Schritte a) und b) gleichzeitig erstellt werden.

4. Verfahren zur Erstellung eines Bajonett-Verbindungselements nach Anspruch 1, wobei in Schritt b) der Winkel der konischen Kontaktfläche (26) zwischen 30 und 60° liegt.

5. Verfahren zur Erstellung eines Bajonett-Verbindungselements nach Anspruch 1, wobei es den folgenden zusätzlichen Schritt beinhaltet:
d) Crimpen eines hinteren Endes des Nockens, der in der entsprechenden Ausdrehung montiert ist, auf einer inneren Fläche (28) der Wand des Verbindungselements.

6. Verfahren zur Erstellung eines Bajonett-Verbindungselements nach Anspruch 1, wobei es den folgenden zusätzlichen Schritt beinhaltet:
e) Aufbringen eines Korrosionsschutzes auf der äußeren Fläche der Wand des Verbindungselements, nach der Erstellung der Ausdrehung und vor dem Einführen des Nockens in die Ausdrehung.

## Claims

1. A method for making a bayonet connecting element for a connector, according to which a connecting element body, with a hollow cylindrical general shape is made, said method includes the following step:
a) a through bore (24) is made by drilling a wall (22) of the body of the connecting element, from the outer surface (21) of said wall;
and said method is **characterised in that** it includes the following additional steps:
b) the outer surface of the wall (21) is machined around the bore so as to create a conical contact surface (26) around said bore;
c) a lug (20) is inserted into the bore, from the outer surface (21) of the wall (22), so that a head (25) of the lug projects from the outer surface (21) of the wall (22) of the connecting element, said lug having a conical contact surface corresponding to the conical contact surface (26) of the bore.

2. The method for making a bayonet connecting element according to claim 1, wherein it includes the following additional step:
- the operations a) to c) are repeated for each of the lugs (20) before being mounted on the wall (22) of the connecting element.

3. The method for making a bayonet connecting element according to claim 1, wherein steps a) and b) are carried out simultaneously.

4. The method for making a bayonet connecting element according to claim 1, wherein at step b), the angle of the conical contact surface (26) is comprised between 30 and 60°.

5. The method for making a bayonet connecting element according to claim 1, wherein it includes the following additional step:
d) the rear end of the lug is crimped, mounted in the corresponding bore, on the inner surface (28) of the wall of the connecting element.

6. The method for making a bayonet connecting element according to claim 1, wherein it includes the following additional step:
e) an anti-corrosion protection is applied over the outer surface of the wall of the connecting element, after having made the bore, and before having inserted the lug into said bore.
